(19) Europäisches Patentamt
European Patent Office
Office européen des brevets

(11) **EP 4 097 183 B1**

(12) **EUROPEAN PATENT SPECIFICATION**

(45) Date of publication and mention
of the grant of the patent:
**19.11.2025  Bulletin 2025/47**

(21) Application number: **21700886.1**

(22) Date of filing: **15.01.2021**

(51) International Patent Classification (IPC):
*C09D 5/02* *(2006.01)*    *C09D 7/61* *(2018.01)*
*C09D 15/00* *(2006.01)*    *C09D 125/14* *(2006.01)*
*C09D 133/06* *(2006.01)*    *C09D 133/08* *(2006.01)*
*C09D 133/12* *(2006.01)*    *B05D 7/00* *(2006.01)*
*B05D 7/08* *(2006.01)*    *C08F 2/22* *(2006.01)*
*C08F 12/08* *(2006.01)*    *C08F 22/14* *(2006.01)*
*B05D 1/26* *(2006.01)*    *C09D 131/04* *(2006.01)*
*C08K 3/34* *(2006.01)*

(52) Cooperative Patent Classification (CPC):
(C-Sets available)
**C09D 15/00; B05D 7/08; B05D 7/536;**
**C08F 212/08; C08F 220/14; C08F 220/1802;**
**C08F 220/1804; C09D 5/022; C09D 7/61;**
**C09D 125/14; C09D 133/064; C09D 133/08;**
**C09D 133/12; B05D 1/26; B05D 2401/20;**    (Cont.)

(86) International application number:
**PCT/EP2021/050760**

(87) International publication number:
**WO 2021/151688 (05.08.2021 Gazette 2021/31)**

(54) **PROCESS OF COATING WOOD**

VERFAHREN ZUM BESCHICHTEN VON HOLZ

PROCÉDÉ DE REVÊTEMENT DE BOIS

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **30.01.2020  EP 20154618**

(43) Date of publication of application:
**07.12.2022  Bulletin 2022/49**

(73) Proprietor: **BASF SE**
**67056 Ludwigshafen am Rhein (DE)**

(72) Inventors:
• **GASCHLER, Wolfgang**
  **67056 Ludwigshafen (DE)**
• **CONIGLIO MOSKOVICS, Rodrigo**
  **Canelones,  15005 (UY)**

(74) Representative: **BASF IP Association**
**BASF SE**
**GBI - Z078**
**67056 Ludwigshafen (DE)**

(56) References cited:
**EP-A1- 3 374 439    US-A- 3 847 857**
**US-A1- 2019 263 941**

(52) Cooperative Patent Classification (CPC): (Cont.)
B05D 2520/00; B05D 2601/24; C08K 3/346;
C08K 2003/2241; C08K 2003/265; C09D 131/04

C-Sets
**C08F 212/08, C08F 220/1804, C08F 220/1808,
C08F 220/14, C08F 220/06;**

**C08F 220/14, C08F 220/1804, C08F 220/06;
C08F 220/1802, C08F 220/14, C08F 220/06;
C08F 220/1804, C08F 220/06;
C08F 220/1804, C08F 220/14, C08F 220/06**

**Description**

The present invention provides a process of coating wood with at least two waterbased coating compositions by applying aqueous polymer dispersions.

Painting wood with an opaque or semi-opaque coating often shows discolorations of the coating by wood components concentrated mainly in knots. A lot of wood types - like for example pine - contain substances like resin acids, stilbenes, lignans or tannins. These constituents, often referred to as extractives, are naturally occurring materials, and are especially concentrated in the knots. Depending on the nature of the water soluble extractives they are extracted from the wood by moisture and migrate through the coating to the coating-air interface where the chromophoric constituents concentrate and can cause discoloration in the form of stains. This is known as extractive bleeding. Knots, especially of many softwood species, contain an abundance and high concentration of these extractives and as a result, paints applied over these knots have a strong tendency to discolor. This is referred to as knot-bleeding. Cheaper woods like pine typically contain a lot of these knots and therefore have a great tendency to shown bleeding and staining.

Wood is typically treated with primers (stain blocking coating compositions) to seal the wood, to improve adhesion of subsequent topcoats and to inhibit the migration of chromophoric constituents. Given the nature of water-based coatings, the staining agents often leach from the substrate into and/or through the coating, causing surface discoloration of the coating.

US 3,847,857 teaches a primer coating based on a cationic water-based dispersion. The underlying concept was that the mostly anionic staining agents are insolubilized by cationic functional groups in the polymer and become entrapped in the primer film. The cationic polymers are copolymers of dimethylaminoethyl methacrylate, methyl methacrylate and ethylene glycol dimethacrylate.

WO 2009/007232 teaches a cationic coating composition on the basis of a cationic methacrylate oligomer dispersion and the product of an emulsion polymerization of acrylates in the presence of this oligomer. Both, the oligomer and the polymer show blocking properties against tannin bleeding and against nicotine or markers.

Both teachings are about cationic coating compositions which have severe disadvantages. Cationic coating compositions cause problems in production as well as in application. Manufacturers produce different coating compositions in their plants. Since the majority of all coating compositions are anionic, the changeover to cationic formulations leads to agglomerations and strong impurities.

U.S. Patent application 2010/0124614 discloses an anionic aqueous coating composition for blocking stains comprising a copolymer of an ethylenically unsaturated non-ionic monomer copolymerized with less than 1.5% of a phosphoethyl (meth)acrylate and less than 3% of methacrylic acid. Even if it solves the problem of bleeding of tannin, it still shows knot-bleeding on tannin-poor wood like pine.

EP 1149875 teaches an aqueous emulsion of a copolymer on the basis of styrene, acrylate and the strong acid monomer phosphoethyl methacrylate as binder in an aqueous stain blocking compositions. Such a coating applied on different substrates as plastic, wood or metal prevents the migration of stains like a marking pen or tannins from wooden substrates to the top of the coating by complexation of the stain by the phosphoethyl methacrylate group in the hydrophobic polymer.

It was therefore an object of the present invention to provide an opaque coating system which is tolerable to impurities within the production process and, which shows a high water stability and low tendency to soiling or elevated resistance to staining.

Further it was an object of the present invention to provide a clear undercoat on the basis of a polyacrylate or polyvinylic acetate - hereinafter referred to as primer - which prevents the yellowing of a white topcoat over pine knots. Especially the system shall prevent discoloration over wood knots in tannin-poor wood especially pine.

Further it was an object of the present invention to provide a method of treating wood, especially pine, to prevent staining.

The object was achieved by a process of coating wood with at least two waterbased coating compositions the process comprising:

a) applying a coating composition A comprising at least one anionic polymer A with a Hansch parameter $\leq 1.6$ and drying or allowing to dry said aqueous coating composition A,
b) applying a coating composition B comprising at least one anionic polymer B with a Hansch parameter $\geq 1.7$ and pigment and drying or allowing to dry said aqueous coating composition B,

with the proviso that the difference of the Hansch Parameters of anionic polymer B and anionic polymer A is at least 0.5, and wherein the anionic polymer A is obtained by free radical aqueous emulsion polymerization of a mixture comprising ethylenically unsaturated monomers A, and wherein the anionic polymer is obtained by free radical aqueous emulsion polymerization of a mixture comprising ethylenically unsaturated monomers B.

A further object of the invention is the wood coated according the inventive process.

A further object of the present invention is a method for blocking stains comprising applying the process steps according to the present invention.

The term "stain bleeding" as used herein means the migration of substances origination from the wooden substrate into the coating leading to a visible change.

Polymer A is formed from at least the monomers A1 and A2. "Polymer A with a Hansch parameter ≤1.6" means that the nature and amounts of monomers A1 and A2 and optional additional monomers have been chosen here such that the polymer A has a Hansch parameter ≤1.6. Polymer B is formed from at least the monomers B1 and B2. "Polymer B with a Hansch parameter ≥1.7" means that the nature and amounts of monomers B1 and B2 and optional additional monomers have been chosen here such that the polymer B has a Hansch parameter ≥1.7.

An essential feature of polymer A is that it has a Hansch parameter ≤1.6, advantageously in the range from 0.4 to 1.2 and particularly advantageously in the range from 0.6 to 1.2.

An essential feature of polymer B is that it has a Hansch parameter ≥1.7, advantageously in the range from 1.8 to 4.0 and particularly advantageously in the range from 2.0 to 4.0.

According to the present invention the difference of the Hansch Parameters of anionic polymer B and anionic polymer A is at least 0.5, advantageously at least 1.0 and particularly advantageously at least 1.5.

The Hansch parameters are generally a measure of the hydrophobicity of monomers M and the polymers P formed therefrom.

The theoretical considerations for the calculation of the Hansch parameters come from: Hansch, Fujita, J. Amer. Chem. Soc., 1964, 86, pages 1616-1626; H. Kubinyi, Methods and Principles of Medicinal Chemistry, Volume 1, R. Mannhold et al., publisher: VCH, Weinheim (1993); C. Hansch and A. Leo, Substituent Constants for Correlation Analysis, in Chemistry and Biology, Wiley, New York (1979); and C. Hansch, P. Maloney, T. Fujita, and R. Muir, Nature, 1962, 194, pages 178-180. In the context of the present document, the Hansch parameters for the monomers are generally calculated with the "KOWWIN v1.68" (September 2010) software which is made available to the public by the US Environmental Protection Agency (EPA) as "Estimation Programs Interface Suite™ for Microsoft® Windows, v4.11" [2012], United States Environmental Protection Agency, Washington, DC, USA. This program ascertained the Hansch parameters for the monomers A1 and A2 and monomers B1 and B2 that were among those used in this document. Since the polymers 1 and 2 used or their aqueous polymer advantageously have a pH in the neutral to slightly alkaline range, complete deprotonation was assumed for the monomers containing acid groups, and so the calculation was made with the salt specified in each case.

| Monomer | Calculated individual Hansch parameter |
|---|---|
| Phosphoethyl methacrylate (as disodium salt, estimation) | -5.6 |
| Itaconic acid (as disodium itaconate) | -5.6 |
| Maleic acid (as disodium maleate) | -5.21 |
| Vinylsulfonic acid (as sodium vinylsulfonate) | -4.17 |
| Acrylic acid (as ammonium acrylate) | -2.43 |
| Methacrylic acid (as ammonium methacrylate) | -1.89 |
| Vinyltrimethoxysilane | -0.31 |
| Hydroxyethyl acrylate | -0.25 |
| Acrylonitrile | 0.21 |
| Acetoacetoxyethyl methacrylate | 0.24 |
| Tetraethylene glycol diacrylate | 0.29 |
| Hydroxyethyl methacrylate | 0.3 |
| Ureidomethacrylate | 0.41 |
| Vinyl acetate | 0.73 |
| Methyl acrylate | 0.73 |
| 3-Methacryloyloxypropyltrimethoxysilane | 0.75 |
| Vinyltriethoxysilane | 1.16 |
| Ethyl acrylate | 1.22 |
| Ethylene | 1.27 |
| Methyl methacrylate | 1.28 |
| Butanediol diacrylate | 2.1 |
| Allyl methacrylate | 2.12 |
| Isobutyl acrylate | 2.13 |
| n-Butyl acrylate | 2.2 |

(continued)

| Monomer | Calculated individual Hansch parameter |
| --- | --- |
| Isobutyl methacrylate | 2.67 |
| Butyl methacrylate | 2.75 |
| Styrene | 2.89 |
| Hexanediol diacrylate | 3.08 |
| Alpha-Methylstyrene | 3.44 |
| 2-Ethylhexyl acrylate | 4.09 |
| 2-Ethylhexyl methacrylate | 4.64 |
| Isobornyl methacrylate | 4.76 |
| Lauryl acrylate | 6.13 |
| Lauryl methacrylate | 6.68 |
| Stearyl acrylate | 9.62 |

The Hansch parameters are calculated for the polymers P formed from the monomers M generally by the following general formula:

$$HP_P = x_1 \cdot HP_{M1} + x_2 \cdot HP_{M2} + \ldots x_n \cdot HP_{Mn}$$

with

$HP_P$:   calculated Hansch parameter of the polymer P formed from the monomers M1, M2 ... Mn

$x_1, x_2, x_n$:   proportions by weight of the monomers M1, M2 .... Mn incorporated into the polymer P in percent divided by 100, where the sum total of $x_1 + x_2 + \ldots + x_n = 1$

$HP_{M1}, HP_{M2}, HP_{Mn}$:   the individual Hansch parameters calculated for each of the monomers M1, M2 .... Mn.

The Hansch parameter for a polymer formed, for example, from 15% by weight of ammonium acrylate and 85% by weight of styrene is therefore calculated as follows:

$$HPP = x_{acrylate} \cdot HP_{acrylate} + x_{styrene} \cdot HP_{styrene}$$

$$HPP = 0.15 \cdot (-2.43) + 0.85 \cdot 2.89 = 2.09$$

In case polymer A is formed by by stepwise polymerization with different monomer compositions the different polymers are taken as one monomer composition for calculating the Hansch parameter. Using this calculation scheme, the example according to the invention of U.S. Patent application 2010/0124614 has an Hansch parameter of 3.25 and the comparative example an Hansch parameter of 3,21. For EP 1149875, the most unpolar polymer (example 2) has a Hansch parameter of 3.1, the most polar polymer (example 3) has an Hansch parameter of 1.7.

The polymer of US 5,527,619 has a calculated Hansch parameter of 1.6.

Coating composition A

According the present invention coating composition A comprises at least one anionic polymer A with a Hansch parameter $\leq 1.6$. The anionic polymer A is obtained by free radical aqueous emulsion polymerization of a mixture comprising ethylenically unsaturated monomers A.

Useful monomers A1 include acid-functional monomer preferably all $\alpha,\beta$-monoethylenically unsaturated $C_3$- to $C_6$-, preferably $C_3$- or $C_4$-mono- or dicarboxylic acids. The invention shall likewise encompass the fully or partly neutralized water-soluble salts, especially the alkali metal or ammonium salts, of the aforementioned carboxylic acids. Examples include acrylic acid, methacrylic acid, ethylacrylic acid, itaconic acid, allylacetic acid, crotonic acid, vinylacetic acid, fumaric acid, maleic acid, 2-methylmaleic acid, but also monoesters of ethylenically unsaturated dicarboxylic acids, such as monoalkyl maleates of $C_1$ to $C_8$ alcohols, and the ammonium, sodium or potassium salts of the aforementioned acids. Monomer A1 is preferably selected from the group comprising acrylic acid, methacrylic acid, crotonic acid, fumaric acid, maleic acid, maleic anhydride, 2-methylmaleic acid and itaconic acid. According to the invention, however, acrylic acid and/or methacrylic acid are used particularly advantageously as monomers A1.

Useful monomers A2 include all nonionic ethylenically unsaturated monomers and are copolymerizable therewith. Examples of useful monomers A2 include vinylaromatic compounds such as styrene, α-methylstyrene, o-chlorostyrene or vinyltoluenes, vinyl halides such as vinyl chloride or vinylidene chloride, esters derived from vinyl alcohol and from monocarboxylic acids having 1 to 18 carbon atoms, preferably 2 to 12 carbon atoms, for example vinyl acetate, vinyl propionate, vinyl n-butyrate, vinyl laurate, and vinyl stearate, $C_1$- to $C_{12}$-alkyl vinyl ethers, such as methyl vinyl ether, ethyl vinyl ether, n-propyl vinyl ether, n-butyl vinyl ether, n-pentyl vinyl ether, n-hexyl vinyl ether, esters derived from α,β-monoethylenically unsaturated mono- and dicarboxylic acids having preferably from 3 to 6 carbon atoms, particular examples being acrylic acid, methacrylic acid, maleic acid, fumaric acid and itaconic acid, with alkanols generally having 1 to 12, preferably 1 to 8 and especially 1 to 4 carbon atoms, particular examples being the methyl, ethyl, n-butyl, isobutyl, pentyl, hexyl, heptyl, octyl, nonyl, decyl and 2-ethylhexyl esters of acrylic acid and of methacrylic acid, the dimethyl or di-n-butyl esters of fumaric acid and of maleic acid, nitriles of α,β-monoethylenically unsaturated carboxylic acids, for example acrylonitrile, methacrylonitrile, fumaronitrile, maleonitrile, and also $C_{4-8}$ conjugated dienes, such as 1,3-butadiene (butadiene) and isoprene. An useful monomer is also ethylene. The aforementioned monomers form generally ≥ 60% by weight, preferably ≥ 80% by weight and especially preferably ≥ 95% by weight of the total amount of all monomers A2, and thus constitute the main monomers A2. Preferably in accordance with the invention, polymer A comprises, as main monomer A2, an ester of acrylic acid or methacrylic acid with a $C_1$ to $C_{12}$ alcohol, especially methyl acrylate, ethyl acrylate, n-butyl acrylate, 2-ethylhexyl acrylate or methyl methacrylate, a vinylaromatic compound, especially styrene or α-methylstyrene, a nitrile of an α,β-monoethylenically unsaturated carboxylic acid, especially acrylonitrile, and/or a vinyl ester of a $C_2$ to $C_{12}$ monocarboxylic acid in copolymerized form.

Further useful monomers A2, to a minor degree, are those ethylenically unsaturated monomers which comprise either at least one sulfo group and/or the corresponding anion thereof or at least one amino, amido, ureido or N-heterocyclic group and/or the nitrogen-protonated or alkylated ammonium derivatives thereof. Examples include acrylamide and methacrylamide; and also vinylsulfonic acid, 2-acrylamido-2-methylpropanesulfonic acid, styrenesulfonic acid, and water-soluble salts thereof, and also N-vinylpyrrolidone, 2-vinylpyridine, 4-vinylpyridine, 2-vinylimidazole, 2-(N,N-dimethylamino)ethyl acrylate, 2-(N,N-dimethylamino)ethyl methacrylate, 2-(N,N-diethylamino)ethyl acrylate, 2-(N,N-diethylamino)ethyl methacrylate, 2-(N-tert-butylamino)ethyl methacrylate, N-(3-N',N'-dimethylaminopropyl) methacrylamide, and 2-(1-imidazolin-2-onyl)ethyl methacrylate. The aforementioned monomers A2 are used generally in amounts of ≤ 10% by weight, preferably ≤ 5% by weight and especially ≤ 1% by weight, based in each case on the total amount of monomers A2.

Further monomers A2 usable in accordance with the invention are functionalized ethylenically unsaturated compounds selected from the group comprising acetoacetoxyethyl acrylate, acetoacetoxypropyl acrylate, acetoacetoxybutyl acrylate, acetoacetoxyethyl methacrylate, acetoacetoxypropyl methacrylate, acetoacetoxybutyl methacrylate, diacetoneacrylamide and diacetonemethacrylamide. The aforementioned monomers A2 are used generally in amounts of ≤ 15% by weight, preferably ≤ 8% by weight and especially ≤ 3% by weight, based in each case on the total amount of monomers A2.

Monomers A2 which typically increase the integrity of the films formed by a polymer matrix normally have at least one epoxy group, at least one carbonyl group, or at least two nonconjugated ethylenically unsaturated double bonds. Examples of these are monomers having two vinyl moieties, monomers having two vinylidene moieties, and also monomers having two alkenyl moieties. Particularly advantageous monomers here are the diesters of dihydric alcohols with α,β-monoethylenically unsaturated monocarboxylic acids, and among these preference is given to acrylic and methacrylic acid. Examples of monomers of this type having two non-conjugated ethylenically unsaturated double bonds are alkylene glycol diacrylates and alkylene glycol dimethacrylates, for example ethylene glycol diacrylate, propylene 1,2-glycol diacrylate, propylene 1,3-glycol diacrylate, butylene 1,3-glycol diacrylate, butylene 1,4-glycol diacrylate, hexane-1,6-diol diacrylate and ethylene glycol dimethacrylate, propylene 1,2-glycol dimethacrylate, propylene 1,3-glycol dimethacrylate, butylene glycol 1,3-dimethacrylate, butylene glycol 1,4-dimethacrylate, hexane-1,6-diol dimethacrylate, and also divinylbenzene, vinyl methacrylate, vinyl acrylate, allyl methacrylate, allyl acrylate, diallyl maleate, diallyl fumarate, methylenebisacrylamide, cyclopentadienyl acrylate, triallyl cyanurate, and triallyl isocyanurate. The aforementioned monomers A2 are used generally in amounts of ≤ 5% by weight, preferably ≤ 3% by weight and especially preferably ≤ 1.5% by weight, based in each case on the total amount of monomers A2.

However, monomers A2 used with preference are selected from the group consisting of vinyl acetate, ethylene, ethyl acrylate, methyl acrylate, methyl methacrylate, styrene, n-butyl acrylate, n-butyl methacrylate and/or 2-ethylhexyl acrylate.

Advantageously, the at least one polymer A therefore comprises, in copolymerized form, acrylic acid and/or methacrylic acid as monomers A1, and vinyl acetate, ethylene, ethyl acrylate, methyl acrylate, methyl methacrylate, styrene, n-butyl acrylate, n-butyl methacrylate and/or 2-ethylhexyl acrylate as monomers A2.

Preferably the anionic polymer A is obtained by free radical aqueous emulsion polymerization of a mixture comprising ethylenically unsaturated monomers A, wherein the monomer mixture comprises:

-    0.1 to ≤ 5 % by weight, based on the total amount of monomers A, of at least one acid-functional monomer, as a monomer A1, preferably acrylic acid and/or methacrylic acid and

- 95 to 99.9 % by weight, based on the total amount of monomers A, of at least one nonionic monomer, as a monomer A2, preferably whereas at least 60 % by weight of the monomer A2 is selected from the group consisting of vinyl acetate, ethylene, ethyl acrylate, methyl acrylate, methyl methacrylate, styrene, n-butyl acrylate, n-butyl methacrylate and 2-ethylhexyl acrylate, and up to 40 % by weight of monomer A2 are other monomers A2.

According to one preferred embodiment the anionic polymer A is obtained by free radical aqueous emulsion polymerization of a mixture comprising ethylenically unsaturated monomers A, wherein the monomer mixture comprises:

- 0.1 to ≤ 5 % by weight, based on the total amount of monomers A of a monomer A1 which is acrylic acid and/or methacrylic acid and

- 95 to 99.9 % by weight, based on the total amount of monomers A, of at least one nonionic monomer, as a monomer A2, whereas at least 60 % by weight of the monomer A2 is selected from the group consisting of ethyl acrylate, methyl acrylate and methyl methacrylate, especially preferred ethyl acrylate, and up to 40 % by weight of monomer A2 are other monomers A2.

According to another preferred embodiment the anionic polymer A is obtained by free radical aqueous emulsion polymerization of a mixture comprising ethylenically unsaturated monomers A, wherein the monomer mixture comprises:

- 0.1 to ≤ 5 % by weight, based on the total amount of monomers A of a monomer A1 which is acrylic acid and/or methacrylic acid and

- 95 to 99.1 % by weight, based on the total amount of monomers A, of at least one nonionic monomer, as a monomer A2, whereas at least 60 % by weight of the monomer A2 is selected from the group consisting of vinylacetate and ethylene and up to 40 % by weight of monomer A2 are other monomers A2.

The conduct of free-radically initiated emulsion polymerizations of ethylenically unsaturated compounds (monomers) in an aqueous medium has already been widely described and is therefore well known to the person skilled in the art [in this regard see Emulsionspolymerisation [Emulsion Polymerization] in Encyclopedia of Polymer Science and Engineering, volume 8, pages 659 ff. (1987); D.C. Blackley, in High Polymer Latices, volume 1, pages 35 ff. (1966); H. Warson, The Applications of Synthetic Resin Emulsions, chapter 5, pages 246 ff. (1972); D. Diederich, Chemie in unserer Zeit 24, pages 135 to 142 (1990); Emulsion Polymerisation, Interscience Publishers, New York (1965); DE-A-40 03 422 and Dispersionen synthetischer Hochpolymerer [Dispersions of Synthetic High Polymers], F. Hölscher, Springer-Verlag, Berlin (1969)]. The free-radically initiated aqueous emulsion polymerization is typically effected by dispersing the monomers, generally with inclusion of dispersing aids, such as emulsifiers and/or protective colloids, in aqueous medium and polymerizing them using at least one water-soluble free-radical polymerization initiator. Frequently, the residual contents of unconverted monomers in the aqueous polymer dispersions obtained are reduced using chemical and/or physical methods likewise known to a person skilled in the art [see for example EP-A 771328, DE-A 19624299, DE-A 19621027, DE-A 19741184, DE-A 19741187, DE-A 19805122, DE-A 19828183, DE-A 19839199, DE-A 19840586 and 19847115], the polymer solids content is adjusted to a desired value by diluting or concentrating, or further customary added substances, for example foam- or viscosity-modifying additives, are added to the aqueous polymer dispersion.

The preparation of the anionic polymer A might be a multistage polymerization process, which means a sequential polymerization in two or more stages of two or more distinct and different monomer mixture is conducted. This is known in principle to those skilled in the art. Suitable preparation processes are therefore disclosed, for all examples in EP-A in examples 1 to 10 according to the invention of EP-A 574803, or all examples of EP-A 1732962. The at least one polymer A may therefore be in neat form (bulk) or be dissolved in a suitable solvent or dispersed in a suitable liquid medium.

The aqueous polymer dispersion A obtained after the polymerization comprises polymer particles having a weight-average particle diameter in the range of ≥ 10 and ≤ 800 nm, advantageously in the range of ≥ 20 and ≤ 400 nm and especially in the range of ≥ 30 and ≤ 150 nm.

Coating composition B

According the present invention coating composition B comprises at least one anionic polymer B with a Hansch parameter ≥1.7. The anionic polymer B is obtained by free radical aqueous emulsion polymerization of a mixture comprising ethylenically unsaturated monomers B.

The monomers B1 correspond here to the monomers A1 and the monomers B2 to the monomers A2 (as described above), except that the nature and amount of these monomers are chosen such that the polymer B obtained therefrom has a Hansch parameter of ≥ 1.7.

Monomers B1 used are preferably acrylic acid and/or methacrylic acid, and monomers B2 used are preferably styrene, $\alpha$-methylstyrene, methyl methacrylate, n-butyl acrylate and/or 2-ethylhexyl acrylate.

In the preparation of the polymer B, the total amount of monomers B1, according to the invention, is ≤ 5% by weight, preferably ≤ 3% by weight and especially preferably ≤ 0.5 % by weight, and the total amount of monomers B2 is accordingly ≥ 95% by weight, preferably ≥ 97% by weight and especially preferably ≥ 99.5% by weight.

Preferably the anionic polymer B is obtained by free radical aqueous emulsion polymerization of a mixture comprising ethylenically unsaturated monomers B, wherein the monomer mixture comprises:

- 0.5 to ≤ 5 % by weight, based on the total amount of monomers B, of at least one acid-functional monomer, as a monomer B1, preferably acrylic acid and/or methacrylic acid
- 95 to 99.5 % by weight, based on the total amount of monomers B, of at least one nonionic monomer, as a monomer B2, preferably whereas at least 60 % of the monomer B2 is selected from the group consisting of styrene and a $C_4$-$C_{10}$-alkyl acrylate, preferably is selected from the group consisting of of styrene, $\alpha$-methylstyrene, methyl methacrylate, n-butyl acrylate and 2-ethylhexyl acrylate, and up to 40 % by weight of monomer B2 are other monomers B2.

According to one preferred embodiment the anionic polymer B is obtained by free radical aqueous emulsion polymerization of a mixture comprising ethylenically unsaturated monomers B, wherein the monomer mixture comprises:

- 0.5 to ≤ 5 % by weight, based on the total amount of monomers B of a monomer B1 which is acrylic acid and/or methacrylic acid and

- 95 to 99.5 % by weight, based on the total amount of monomers B, of at least one nonionic monomer, as a monomer B2, whereas at least 60 % by weight of the monomer B2 consist of styrene and at least one $C_4$-$C_{10}$-alkyl acrylate, preferably the $C_4$-$C_{10}$-alkyl acrylate is selected from the group consisting of n-butyl acrylate, n-butyl methacrylate and 2-ethylhexyl acrylate, and up to 40 % by weight of monomer B2 are other monomers B2.

According to another preferred embodiment the anionic polymer B is obtained by free radical aqueous emulsion polymerization of a mixture comprising ethylenically unsaturated monomers B, wherein the monomer mixture comprises:

- 0.1 to ≤ 5 % by weight, based on the total amount of monomers B of a monomer B1 which is acrylic acid and/or methacrylic acid and

- 95 to 99.1 % by weight, based on the total amount of monomers B, of at least one nonionic monomer, as a monomer B2, whereas at least 60 % by weight of the monomer B2 consists of methyl methacrylate and at least one $C_4$-$C_{10}$-alkyl acrylate, preferably the $C_4$-$C_{10}$-alkyl acrylate is selected from the group consisting of, n-butyl acrylate, n-butyl methacrylate and 2-ethylhexyl acrylate, and up to 40 % by weight of monomer B2 are other monomers B2.

The preparation of the at least one anionic polymer B is known in principle to those skilled in the art and is analog the preparation of the anionic polymer A described above.

The aqueous polymer dispersion B obtained after the polymerization comprises polymer particles having a weight-average particle diameter in the range of ≥ 10 and ≤ 800 nm, advantageously in the range of ≥ 20 and ≤ 400 nm and especially in the range of ≥ 30 and ≤ 150 nm.

The waterbased coating composition B according the present invention comprises at least one anionic polymer and a pigment. Pigments used may in principle be any white or color pigments familiar to the person skilled in the art. According to CD Römpp Chemie Lexikon - Version 1.0, Stuttgart/New York: Georg Thieme Verlag 1995 with reference to DIN 55943, pigments are understood to mean particulate inorganic or organic, colored or uncolored colorants that are virtually insoluble in the application medium.

Titanium dioxide in its various polymorphs should be mentioned as the most important white pigment owing to its high refractive index (rutile: 2.70 and anatase: 2.55) and its good hiding power. Alternatively, zinc oxide and zinc sulfide are used as white pigments. These white pigments may be used in surface-coated or uncoated form. Alternatively, organic white pigments are also used, for example non-filming hollow polymer particles that are rich in styrene and carboxyl groups and have a particle size of about 300 to 400 nm (called opaque particles).

As well as white pigments, coloring can be accomplished using a wide variety of different color pigments that are familiar to those skilled in the art, for example the somewhat less costly inorganic iron oxides or sulfides, cadmium oxides or sulfides, chromium oxides or sulfides and lead oxides or sulfides, lead molybdate, cobalt blue or carbon black, and the somewhat more costly organic pigments, for example phthalocyanines, azo pigments, quinacridones, perylenes or carbazoles. Preferably in accordance with the invention, however, titanium dioxide, especially in its rutile form, is used as at least one pigment.

Preferred are titanium dioxide, calcium carbonate, clay, talcum, mostly preferred is titanium dioxide.

The coating once applied may be allowed to dry naturally at ambient temperature and more preferably at a temperature in the range of from 10 to 80 °C, mostly preferable between 25°C and 60°C.

In accordance with the invention, the process of coating wood with at least two waterbased coating compositions comprises the applying and drying of coating composition A and the applying and drying of coating composition B. It is possible to apply coating composition A as one, two or more layers, preferably as one layer. Further it is possible to apply coating composition B as one, two or more layers, preferably as one layer.

In a preferred embodiment the anionic polymer A is obtained by free radical aqueous emulsion polymerization of a monomer mixture comprising 0.1 to ≤ 5 % by weight, based on the total amount of monomers A of acrylic acid and 95 to 99.1 % by weight, based on the total amount of monomers A, of at least one nonionic monomer A2, whereas at least 60 % by weight of the monomer A2 is selected from the group consisting of vinyl acetate and ethyl acrylate;

and the anionic polymer B is obtained by free radical aqueous emulsion polymerization of a monomer mixture comprising 0.5 to ≤ 5 % by weight, based on the total amount of monomers B of acrylic acid and/or methacrylic acid and 95 to 99.5 % by weight, based on the total amount of monomers B, of at least one nonionic monomer B2, whereas at least 60 % by weight of the monomer B2 is styrene.

The coating compositions A and/or B may be applied to a wide variety of wood and wood composites like veneer. Both, soft wood and hard wood can be applied, more special species are pine, spruce, beach, oak, walnut, cherry, eucalyptus and ash. Preferred are species rich in resinous compounds, most preferred is pine.

Application to a substrate may be by any conventional method including brushing, dipping, flow coating, spraying, roller coating and pad coating.

The coating compositions A and/or B used in the inventive process may also comprise further customary auxiliaries that are familiar to the person skilled in the art in terms of nature and amount, for example fillers, soluble dyes, optical brighteners, retention agents, wetting agents, film-forming auxiliaries, defoamers, preservatives, biocides, slime control agents, plasticizers, antiblocking agents, antistats, buffer substances, hydrophobizing agents, etc..

Fillers used are essentially inorganic materials having a lower refractive index compared to the pigments (white fillers, according to DIN 55943 and DIN 55945, have refractive index values < 1.7). The pulverulent fillers are frequently naturally occurring minerals, for example calcite, chalk, dolomite, kaolin, talc, mica, diatomaceous earth, baryte, quartz or talc/chlorite assemblages, but also synthetically produced inorganic compounds, for example precipitated calcium carbonate, calcined kaolin or barium sulfate, and fumed silica. The filler used is preferably calcium carbonate in the form of crystalline calcite or of amorphous chalk.

Optionally, the coating compositions A and/or B may also comprise at least one organic solvent that preferably acts as a film-forming auxiliary. Useful examples for this purpose include aromatic hydrocarbons, such as solvent naphtha, benzene, toluene, xylene, or mixtures of aromatic hydrocarbons as sold, for example, as Solvesso® 100, 150 or 200, chlorobenzene, esters such as ethyl acetate, butyl acetate, methylglycol acetate, ethylglycol acetate, methoxypropyl acetate, 2,2,4-trimethylpentane-1,3-diol monoisobutyrate (Texanol® from Eastman), dipropylene glycol monomethyl ether acetate, propylene glycol monoethyl ether acetate, propylene glycol monomethyl ether acetate, ethers such as butylglycol, tetrahydrofuran, dioxane, ethylglycol ether, diethylene glycol monoethyl ether, diethylene glycol monomethyl ether, diethylene glycol mono-n-butyl ether, diethylene glycol mono-n-hexyl ether, diethylene glycol diethyl ether, diethylene glycol dimethyl ether, diethylene glycol di-n-butyl ether, diethylene glycol di-n-hexyl ether, ethylene glycol di-2-ethylhexyl ether, ethylene glycol di-n-butyl ether, ethylene glycol di-n-hexyl ether, ethylene glycol din-propyl ether, dipropylene glycol dimethyl ether, dipropylene glycol monomethyl ether, dipropylene glycol mono-n-butyl ether, dipropylene glycol mono-n-propyl ether, dipropylene glycol mono-tert-butyl ether, dipropylene glycol di-tert-butyl ether, propylene glycol monoethyl ether, propylene glycol monomethyl ether, propylene glycol mono-n-propyl ether, propylene glycol monophenyl ether, propylene glycol mono-tert-butyl ether, propylene glycol diphenyl ether, propylene glycol mono-n-butyl ether, tripropylene glycol monomethyl ether and poly(allyl glycidyl ether), ketones such as acetone, methyl ethyl ketone, halogenated organic solvents such as methylene chloride or trichloromonofluoroethane or other organic solvents, for example benzyl alcohol, dibutyl phthalate, propylene glycol, tris(butoxyethyl) phosphate.

Film-forming auxiliaries are used especially in order to lower the minimum film-forming temperature of the emulsion polymers and hence to contribute to good film formation.

The coating composition A may contain pigments. Preferably it contains no pigment.

The coating compositions B applied according the invention generally have a pigment volume concentration of ≥ 0% and ≤ 60%, advantageously ≥ 5% and ≤ 40% and especially advantageously ≥ 10% and ≤ 30%. Pigment volume concentration (PVC) is understood here to mean the volume of the pigments and fillers multiplied by 100, divided by the volume of the binder polymer plus the volume of the pigments and fillers.

$$\% \text{ PVC} = \frac{\text{Volume of the pigments and fillers}}{\text{Volume of the binder polymer + volume of the pigments and fillers}} \times 100$$

It is of particular significance that the invention is also to encompass coating compositions, especially coating formulations for specific fields of use, in particular,

concealing wood varnishes comprising (calculated as solids)

| | |
|---|---|
| $\geq$ 15% and $\leq$ 60% by weight | of total polymer (= sum of polymer A and polymer B) |
| $\geq$ 0% and $\leq$ 20% by weight | of film-forming auxiliaries |
| $\geq$ 1% and $\leq$ 40% by weight | of pigments |
| $\geq$ 0% and $\leq$ 50% by weight | of fillers |
| $\geq$ 0.1% and $\leq$ 5% by weight | of dispersing aids |
| $\geq$ 0% and $\leq$ 20% by weight | of thickeners, and |
| $\geq$ 0% and $\leq$ 30% by weight | of further auxiliaries, such as buffer substances, biocides etc., |

based on the solids content of the aqueous coating formulations mentioned.

It is significant that the coating compositions A and/or B are advantageously adjusted with a base, especially ammonia or aqueous ammonia solution, to a pH in the range of $\geq$ 7.5 and $\leq$ 10.0 and particularly advantageously $\geq$ 8.0 and $\leq$ 9.0.

Advantageously, the coating compositions A and/or B are first applied to the surface of a substrate and then dried at a temperature T equal to or greater than the minimum film-forming temperature (MFT) [T $\geq$ MFT] of the aqueous polymer dispersion of the invention or aqueous formulation thereof. Advantageously, the drying temperature T $\geq$ (MFT + 5) °C, particularly advantageously T $\geq$ (MFT + 10) °C and especially T $\geq$ (MFT + 20) °C.

In the context of this document, the MFT is understood to mean the temperature determined experimentally according to DIN ISO 2115 of April 2001, below which the aqueous polymer dispersion does not form a continuous polymer film.

Preferably the anionic polymers A and B independently have a glass transition temperature in the range from -20°C to 60°C, more preferred the polymer A has a glass transition temperature in the range from -10 to 40°C and the second polymer B has a glass transition temperature in the range from 10°C to 60°C, mostly preferred the polymer B has a glass transition temperature in the range from 25°C to 50°C.

The person skilled in the art knows that according to Fox (T.G. Fox, Bull. Am. Phys. Soc. 1956 [Ser. II] 1, page 123) and Ullmann's Encyclopädie der technischen Chemie, Bd. 19, Seite 18, 4. 30 Auflage, Verlag Chemie, Weinheim, 1980) the glass transition temperature of not or only weakly crosslinked polymers can be estimated in good agreement according to the formula

$$1/Tg = x1/Tg1 + x2/Tg2 + .... xn/Tgn,$$

where x1, x2, .... xn are the molar fractions of the monomers 1, 2, .... n and Tg1, Tg2, .... Tgn the glass transition temperature of the respective homopolymers of the monomers 1, 2, .... n in degree Kelvin. The glass transition temperatures of the respective homopolymers are known for the most ethylenic unsaturated monomers or can be measured easily as for example described in J. Brandrup, E.H. Immergut, Polymer Handbook 1st Ed. J. Wiley, New York, 1966, 2nd Ed. J. Wiley, New York, 1975 and 3rd Ed. J. Wiley, New York, 1989, or Ullmann's Encyclopedia of Industrial Chemistry, page 169, Verlag Chemie, Weinheim, 1992.

It is of significance in accordance with the invention that the amount of aqueous formulation is chosen such that the coating A and/or the coating B applied to the substrate, after drying, has a layer thickness of $\leq$ 2 mm, advantageously $\geq$ 0.01 and $\leq$ 1.5 mm and especially advantageously $\geq$ 0.05 and $\leq$ 0.5 mm. It will be appreciated that it is possible in accordance with the invention that two or more identical or different coating layers can be applied successively to a substrate.

The present invention provides an opaque coating system which is tolerable to impurities within the production process. It further shows a high water stability. The coating applied to wood shows a low tendency to soiling or elevated resistance to staining.

The present invention provides a clear undercoat on the basis of preferably a polyacrylate or polyvinylic acetate which prevents the discolouration and yellowing of a white topcoat over tannin-poor wood especially pine knots.

The present invention further relates to wood, preferably pine, coated according the inventive process.

Also disclosed is the use of a coating composition A, comprising an aqueous anionic polymer A with a Hansch parameter ≤1.6, as an undercoat for coating wood. Suitable anionic polymers A are described above. Preferred anionic polymers A are those polymers which are cited as preferred polymers, namely polymers A comprising of, in copolymerized form, acrylic acid and/or methacrylic acid as monomers A1, and vinyl acetate, ethylene, ethyl acrylate, methyl acrylate, methyl methacrylate, styrene n-butyl acrylate, n-butyl methacrylate and/or 2-ethylhexyl acrylate as monomers A2. Especially preferred are the preferred embodiments described above for polymers A. Finally, the present invention provides a method for blocking stains comprising applying the inventive process.

The invention is to be elucidated by nonlimiting examples which follow.

Examples

Unless the context suggests otherwise, percentages are always by weight. A reported content is based on the content in aqueous solution or dispersion if not stated otherwise.

The solids content was measured according to ISO 3251.

The pH-value was measured according to ISO 976.

The minimum film forming temperature was measured according to ISO 16808.

The glass transition temperature (Tg) was measured according to DIN EN ISO 11357-2 (2013-09) (differential thermo analysis, midpoint temperature, heating rate 20 K/min).

The weight average particle size of the polymer dispersions was measured according ISO 13321 using a High Performance Particle Sizer (Malvern) at 22 °C and a wavelength of 633 nm.

Preparation of the polymer dispersions D1:

A 4L-reactor was inertized by passing nitrogen through for 10 minutes, then charged with 700 g of demineralized water, 25 g of a 33% seed latex of polystyrene with a particle size of 33 nm. The reactor containing the above charge was heated to 85 °C and stirred over the complete time of synthesis. 5 g of 7 wt% sodium peroxosulfate aqueous solution was added at 85°C. After the addition, an emulsion feed was started and fed within 210 minutes. In parallel to the emulsion feed, 95 g of 7 wt% sodium peroxosulfate aqueous solution was started and fed to the reactor with 240 min. After the end of the initiator feed, the reaction mixture was cooled to 75 °C. To the reaction mixture was then added 43 g of a 8 wt% aqueous solution of sodium hydroxide within 5 minutes. After that 26 g of a 10 wt% aqueous solution of tert-butyl hydroperoxide solution and 20 g of a 13 wt% solution of sodium sulfite were added within 60 minutes. After the end of the feed, the reaction mixture was cooled to room temperature.

The emulsion feed was prepared by mixing 520 g of demineralized water, 26 g of a sodium salt of a fatty alcohol polyglycol ether sulfate and 6.5 g of sodium dodecyl sulfate, and 1278 g of a mixture of monomers with was composed from 16 weight % of n-butyl acrylate, 14 weight % of 2-ethylhexyl acrylate, 57 weight% of styrene, 10 weight % of methyl methacrylate and 3 weight % of acrylic acid. The resulting latex D1 had a solids content of 48.1 wt%, the particle size was 146 nm measured by dynamic light scattering. The pH was 6.9. The glass transition temperature was measured to 40 °C.

Preparation of dispersion Dx (x=1 to x=7)

The dispersion Dx was prepared identical to the procedure of dispersion D1, only using the respective monomer mixtures of table 1. The results are summarized in table 2.

Table 1: Monomer compositions of the polymers A and B

| dispersion | nBA [wt%] | EHA [wt%] | EA [wt%] | S [wt%] | BMA [wt%] | MMA [wt%] | AA [wt%] | MAA [wt%] |
|---|---|---|---|---|---|---|---|---|
| D1 | 16 | 14 | | 57 | | 10 | 3 | |
| D2 | 18 | | | | 21 | 56 | | 5 |
| D3 | 37 | | | | | 60 | 3 | |
| D4 | 49 | | | | | 48 | 3 | |
| D5 | | | 75 | | | 20 | | 5 |
| D6 | 19 | 19 | | 57 | | | 5 | |

(continued)

| dispersion | nBA [wt%] | EHA [wt%] | EA [wt%] | S [wt%] | BMA [wt%] | MMA [wt%] | AA [wt%] | MAA [wt%] |
|---|---|---|---|---|---|---|---|---|
| D7 |  |  |  |  | 97 |  |  | 3 |

nBA = n-butyl acrylate
EHA = 2-ethylhexyl acrylate
EA = ethyl acrylate
S = styrene
BMA = n-butyl methacrylate
MMA = methyl methacrylate
AA = acrylic acid
MAA = methacrylic acid
wt% = % by weight

Table 2: Characteristics of Dispersion D1 to D7 and comparative Dispersions D8 to D10

| Dispersion | solids content [wt%] | particle size [nm] | pH | Hansch-parameter of polymer | $T_g$ [°C] |
|---|---|---|---|---|---|
| D1 | 48.1 | 146 | 6.9 | 2.63 | 41 |
| D2 | 48.3 | 150 | 7.0 | 1.60 | 53 |
| D3 | 48.4 | 152 | 6.9 | 1.51 | 33 |
| D4 | 48.2 | 149 | 6.8 | 1.62 | 15 |
| D5 | 47.2 | 155 | 6.7 | 1.08 | 15 |
| D6 | 48.4 | 145 | 6.9 | 2.72 | 27 |
| D7 | 48.3 | 143 | 7.0 | 2.61 | 35 |
| D8 |  |  |  | 0.79* | 21 |
| D9 |  |  |  | 0.83* | 12 |
| D10 |  |  |  | 0.73* | 42 |

$T_g$ = glass transition temperature
*estimated from $T_g$

Dispersion D8, D9 and D10 are commercially available product based on the monomer vinyl acetate. The monomer composition was calculated using the glass transition temperature and the Fox equation under the assumption that the polymers are composed on only vinyl acetate and ethylene. With this theoretical composition, the respective Hansch parameter was calculated.

D8: Mowilith® LDM 1852 (Celanese), theoretical monomer composition: 88 weight % vinyl acetate; 12 weight % ethylene;

D9: Mowilith LDM 1871 (Celanese), theoretical monomer composition: 82 weight % vinyl acetate; 18 weight % ethylene;

D10: Vinnapas® DP 55 (Wacker); theoretical monomer composition: 100% vinyl acetate;

Preparation of the $TiO_2$-paste:

14.6 g of tap water was put in a 100 ml vessel. 6.2 g of Dispex Ultra PX 4575 (BASF SE) was added to the water as dispersing agent. Subsequent, 0.3 g of Hydropalat WE 3650 (BASF SE) was added as wetting agent and 0.3 g of Foamstar SI 2210 (BASF SE) as defoamer. Subsequent 78 g of Kronos 2190, a titanium dioxide ($TiO_2$) from Kronos Worldwide was added. The mixture was stirred in an Ultraturrax for 10 minutes at 5000 rounds per minute to disperse the $TiO_2$.

Preparation of the lacquers

Preparation of clear lacquers (CLx):

100 g of the dispersion Dx was diluted by tap water to a viscosity of 200 mPas (Brookfield, 25°C, spindle 2, 20 rounds per minute) is necessary. Then, a 10% aqueous solution of ammonia was added to reach a pH value of 8.5. Subsequent, 0.5% of Hydropalat® WE 3221 (BASF SE) was added as wetting agent as well as 0.5% of Byk 24 (BYK) as defoamer. Subsequent, 6 g of ethylene glycol butyl ether was added as coalescing agent. 10 minutes stirring resulted in CLx.

Preparation of a pigmented ("white") lacquer (PLx):

The pigmented lacquer PLx was prepared using the respective clear lacquer CLx. The pigmented lacquer was prepared by the addition of a $TiO_2$-paste. To 80 g of clear lacquer CLx 20 g of $TiO_2$-paste was added and stirred for 10 minutes.

Process of coating wood:

The barrier properties of the lacquers against penetration of colored substances from the wood was tested using fresh cut wood species containing knots. The wood pieces were cut in such a way that the knots in the wood were halved. The wood used was pinus cembra, in German "Zirbelkiefer".

The freshly cut wood was coated afterwards with the respective lacquers using a slit coater with a slit of 200 $\mu$m. The whole surface including the knot cut into halves was coated.

The first coating (Composition A), the "primer" was dried at 25°C for 24 hours in the lab. Subsequent, a second coating (Composition B), the "top coat", was applied. The piece of wood, coated with a primer and top coat, was dried for 14 days at 25°C in the lab.

Testing

Subsequent, the coated wood was put into a chamber for 72 hours for artificial weathering. Within the chamber, the coated, dry wood was irradiated using a Xenon arc lamp for 102 minutes and subsequent 18 minutes water was sprayed over the wood. 102 minutes of irradiation and 18 minutes of spraying water resembles 1 cycle. Within the 72 hours, 36 cycles were applied to the coated wood. The procedure is according to EN ISO 4892-2:2013 procedure A, cycle 1.

The coated wood was ranked visually according to the discoloration of the white coating over a knot.

Ranking 0: no discoloration visible
Ranking 1: a slight, yellowish-brown discoloration is visible.
Ranking 2: a distinct discoloration is visible.

Table 3: Application test results of the coating resulting from coating process with composition A and composition B

| E | Composition A (primer) | $HP_A$ polymer A | Composition B (top coat) | $HP_B$ polymer B | $\Delta HP_B - HP_A$ | Result |
|---|---|---|---|---|---|---|
| E1 | CL5 | 1.08 | PL1 | 2.63 | 1.55 | 0 |
| E2 | CL3 | 1.51 | PL1 | 2.63 | 1.12 | 1 |
| E3 | CL8 | 0.79 | PL1 | 2.63 | 1.84 | 0 |
| E4 | CL9 | 0.83 | PL1 | 2.63 | 1.80 | 0 |
| E5 | CL10 | 0.73 | PL1 | 2.63 | 1.90 | 0 |
| E6 | PL5 | 1.08 | PL1 | 2.63 | 1.55 | 0 |
| E7 | PL3 | 1.51 | PL1 | 2.63 | 1.12 | 1 |
| E9 | PL5 | 1.08 | PL1 | 2.63 | 1.55 | 0 |
| E10 | CL5 | 1.08 | PL2 | 1.6 | 0.52 | 1 |
| E11 | CL3 | 1.51 | PL6 | 2.72 | 1.21 | 0 |
| E12 | CL8 | 0.79 | PL7 | 2.61 | 1.82 | 0 |

(continued)

| E | Composition A (primer) | HP$_A$ polymer A | Composition B (top coat) | HP$_B$ polymer B | Δ HP$_B$ - HP$_A$ | Result |
|---|---|---|---|---|---|---|
| E13 | CL3 | 1.51 | PL2 | 1.6 | 1.09 | 1 |
| CE | | | | | | |
| CE14 | CL5 | 1.08 | PL5 | 1.08 | 0 | 2 |
| CE15 | CL1 | 2.63 | PL1 | 2.63 | 0 | 2 |
| CE16 | PL1 | 2.63 | PL1 | 2.63 | 0 | 2 |
| CE17 | PL1 | 2.63 | CL1 | 2.63 | 0 | 2 |
| CE18 | CL8 | 0.79 | PL8 | 0.79 | 0 | 2 |
| CE19 | CL9 | 0.83 | PL5 | 1.08 | 0.25 | 2 |
| CE20 | CL3 | 1.51 | PL3 | 1.51 | 0 | 2 |
| CE22 | CL6 | 2.72 | PL6 | 2.72 | 0 | 2 |
| CE23 | CL6 | 2.72 | PL2 | 1.74 | -0.98 | 2 |
| CE24 | CL8 | 0.79 | PL10 | 0.73 | -0.06 | 2 |
| CE25 | PL10 | 0.73 | CL8 | 0.79 | 0.06 | 2 |

E: Example
CE: Comparative Example
HP$_A$: Hansch Parameter of Polymer A;
HP$_B$: Hansch Parameter of Polymer B
Result: Ranking of discoloration after weathering

From the experimental data it can be seen that only the combination of a polar polymer with a Hansch parameter below 1.6 and unpolar polymer with a Hansch parameter above 1.6 are able to stop discoloration. Two polymers with Hansch parameters each below 1.6 or a single polymer applied twice as primer and top coat with Hansch parameters below 1.6 stop discoloration. Also two polymers or a single polymer applied twice each having a Hansch parameter above 1.6 do not stop discoloration.

**Claims**

1. A process of coating wood with at least two waterbased coating compositions the process comprising:

   a) applying a coating composition A comprising at least one anionic polymer A with a Hansch parameter ≤1.6, and drying or allowing to dry said aqueous coating composition A,
   b) applying a coating composition B comprising at least one anionic polymer B with a Hansch parameter ≥1.7 and pigment, and drying or allowing to dry said aqueous coating composition B,

   with the proviso that the difference of the Hansch Parameters of anionic polymer B and anionic polymer A is at least 0.5, and wherein the anionic polymer A is obtained by free radical aqueous emulsion polymerization of a mixture comprising ethylenically unsaturated monomers A and wherein the anionic polymer B is obtained by free radical aqueous emulsion polymerization of a mixture comprising ethylenically unsaturated monomers B

2. The process according to claim 1, wherein the difference of the Hansch Parameters of anionic polymer B and anionic polymer A is at least 0.7.

3. The process according to either of claims 1 and 2, wherein the anionic polymer A is obtained by free radical aqueous emulsion polymerization of a mixture comprising ethylenically unsaturated monomers A, wherein the monomer mixture comprises:

   - 0.1 to ≤ 5 % by weight, based on the total amount of monomers A, of at least one acid-functional monomer, as a monomer A1, and
- 95 to 99.9 % by weight, based on the total amount of monomers A, of at least one nonionic monomer, as a monomer A2.

4. The process according to any of claims 1 to 3, wherein the anionic polymer A is formed from

- 0.1 to ≤ 5 % by weight, based on the total amount of monomers A, of at least one acid-functional monomer, as a monomer A1, and
- 95 to 99.9 % by weight, based on the total amount of monomers A, of at least one nonionic monomer, as a monomer A2, whereas at least 60 % by weight of the monomer A2 is selected from the group consisting of vinyl acetate, ethyl acrylate, methyl acrylate, methyl methacrylate, styrene, n-butyl acrylate, n-butyl methacrylate and 2-ethylhexyl acrylate, and up to 40 % of monomer A2 are other monomers A2.

5. The process according to any of claims 1 to 4, wherein anionic polymer B is obtained by free radical aqueous emulsion polymerization of a mixture comprising ethylenically unsaturated monomers B, wherein the monomer mixture comprises:

- 0.5 to ≤ 5 % by weight, based on the total amount of monomers B, of at least one acid-functional monomer, as a monomer B1 and
- 95 to 99.5 % by weight, based on the total amount of monomers B, of at least one nonionic monomer, as a monomer B2.

6. The process according to any of claims 1 to 5, wherein the anionic polymer B is formed from:

- 0.5 to ≤ 5 % by weight, based on the total amount of monomers B, of at least one acid-functional monomer, as a monomer B1, and
- 95 to 99.5 % by weight, based on the total amount of monomers B, of at least one nonionic monomer, as a monomer B2, whereas at least 60 % of the monomer B2 is selected from the group consisting of styrene, $\alpha$-methyl styrene, methyl methacrylate, n-butyl acrylate and 2-ethylhexyl acrylate, and up to 40 % of monomer B2 are other monomers B2.

7. The process according to any of claims 3 to 6, wherein the acid-functional monomer, as a monomer A1 and/or B1 are acrylic acid and/or methacrylic acid.

8. The process according to any of claims 1 to 7, wherein the pigment is selected from the group consisting of titanium dioxide, calcium carbonate, clay and talcum.

9. The process according to any of claims 1 to 8, wherein

- the anionic polymer A is obtained by free radical aqueous emulsion polymerization of a monomer mixture comprising 0.1 to ≤ 5 % by weight, based on the total amount of monomers A of acrylic acid and 95 to 99.1 % by weight, based on the total amount of monomers A, of at least one nonionic monomer A2, whereas at least 60 % by weight of the monomer A2 is selected from the group consisting of vinyl acetate and ethyl acrylate;
- and the anionic polymer B is obtained by free radical aqueous emulsion polymerization of a monomer mixture comprising 0.5 to ≤ 5 % by weight, based on the total amount of monomers B of acrylic acid and/or methacrylic acid and 95 to 99.5 % by weight, based on the total amount of monomers B, of at least one nonionic monomer B2, whereas at least 60 % by weight of the monomer B2 is styrene.

10. A process according to any of claims 1 to 9 wherein the anionic polymers A and B independently have a glass transition temperature in the range from -20°C to 60°C.

11. Wood coated according the process of any of claims 1 to 10.

12. Wood coated according to claim 10, wherein the wood is pine.

13. A method for blocking stains comprising applying the process according any of claims 1 to 10.

**Patentansprüche**

1. Verfahren zum Beschichten von Holz mit mindestens zwei Beschichtungszusammensetzungen auf Wasserbasis, wobei das Verfahren Folgendes umfasst:

   a) Aufbringen einer Beschichtungszusammensetzung A, die mindestens ein anionisches Polymer A mit einem Hansch-Parameter ≤1,6 umfasst, und Trocknen oder Trocknenlassen der wässrigen Beschichtungszusammensetzung A,
   b) Aufbringen einer Beschichtungszusammensetzung B, die mindestens ein anionisches Polymer B mit einem Hansch-Parameter ≥1,7 und Pigment umfasst, und Trocknen oder Trocknenlassen der wässrigen Beschichtungszusammensetzung B,

   mit der Maßgabe, dass die Differenz der Hansch-Parameter des anionischen Polymers B und des anionischen Polymers A mindestens 0,5 beträgt, und wobei das anionische Polymer A durch radikalische Wässrigemulsionspolymerisation eines Gemischs erhalten wird, das ethylenisch ungesättigte Monomere A umfasst, und wobei das anionische Polymer B durch radikalische Wässrigemulsionspolymerisation eines Gemischs erhalten wird, das ethylenisch ungesättigte Monomere B umfasst.

2. Verfahren nach Anspruch 1, wobei die Differenz der Hansch-Parameter des anionischen Polymers B und des anionischen Polymers A mindestens 0,7 beträgt.

3. Verfahren nach einem der Ansprüche 1 und 2, wobei das anionische Polymer A durch radikalische Wässrigemulsionspolymerisation eines Gemischs erhalten wird, das ethylenisch ungesättigte Monomere A umfasst, wobei das Monomergemisch Folgendes umfasst:

   - zu 0,1 bis ≤ 5 Gew.-%, bezogen auf die Gesamtmenge der Monomere A, mindestens ein Monomer mit Säurefunktionalität als Monomer A1 und
   - zu 95 bis 99,9 Gew.-%, bezogen auf die Gesamtmenge der Monomere A, mindestens ein nichtionisches Monomer als Monomer A2.

4. Verfahren nach einem der Ansprüche 1 bis 3, wobei das anionische Polymer A aus Folgendem gebildet wird:

   - zu 0,1 bis ≤ 5 Gew.-%, bezogen auf die Gesamtmenge der Monomere A, mindestens ein Monomer mit Säurefunktionalität als Monomer A1 und
   - zu 95 bis 99,9 Gew.-%, bezogen auf die Gesamtmenge der Monomere A, mindestens ein nichtionisches Monomer als Monomer A2, während mindestens 60 Gew.-% des Monomers A2 aus der Gruppe bestehend aus Vinylacetat, Ethylacrylat, Methylacrylat, Methylmethacrylat, Styrol, n-Butylacrylat, n-Butylmethacrylat und 2-Ethylhexylacrylat ausgewählt sind und es sich bei bis zu 40 Gew.-% von Monomer A2 um andere Monomere A2 handelt.

5. Verfahren nach einem der Ansprüche 1 bis 4, wobei das anionische Polymer B durch radikalische Wässrigemulsionspolymerisation eines Gemischs erhalten wird, das ethylenisch ungesättigte Monomere B umfasst, wobei das Monomergemisch Folgendes umfasst:

   - zu 0,5 bis ≤ 5 Gew.-%, bezogen auf die Gesamtmenge der Monomere B, mindestens ein Monomer mit Säurefunktionalität als Monomer B1 und
   - zu 95 bis 99,5 Gew.-%, bezogen auf die Gesamtmenge der Monomere B, mindestens ein nichtionisches Monomer als Monomer B2.

6. Verfahren nach einem der Ansprüche 1 bis 5, wobei das anionische Polymer B aus Folgendem gebildet wird:

   - zu 0,5 bis ≤ 5 Gew.-%, bezogen auf die Gesamtmenge der Monomere B, mindestens ein Monomer mit Säurefunktionalität als Monomer B1 und
   - zu 95 bis 99,5 Gew.-%, bezogen auf die Gesamtmenge der Monomere B, mindestens ein nichtionisches Monomer als Monomer B2, während mindestens 60 Gew.-% des Monomers B2 aus der Gruppe bestehend aus Styrol, $\alpha$-Methylstyrol, Methylmethacrylat, n-Butylacrylat und 2-Ethylhexylacrylat ausgewählt sind und es sich bei bis zu 40 Gew.-% von Monomer B2 um andere Monomere B2 handelt.

7.  Verfahren nach einem der Ansprüche 3 bis 6, wobei es sich bei dem Monomer mit Säurefunktionalität als Monomer A1 und/oder B1 um Acrylsäure und/oder Methacrylsäure handelt.

8.  Verfahren nach einem der Ansprüche 1 bis 7, wobei das Pigment aus der Gruppe bestehend Titandioxid, Calciumcarbonat, Ton und Talk ausgewählt ist.

9.  Verfahren nach einem der Ansprüche 1 bis 8, wobei

    - das anionische Polymer A durch radikalische Wässrigemulsionspolymerisation eines Monomergemischs erhalten wird, das zu 0,1 bis ≤ 5 Gew.-%, bezogen auf die Gesamtmenge der Monomere A, Acrylsäure und zu 95 bis 99,1 Gew.-%, bezogen auf die Gesamtmenge der Monomere A, mindestens ein nichtionisches Monomer A2 umfasst, während mindestens 60 Gew.-% des Monomers A2 aus der Gruppe bestehend aus Vinylacetat und Ethylacrylat ausgewählt sind;
    - und das anionische Polymer B durch radikalische Wässrigemulsionspolymerisation eines Monomergemischs erhalten wird, das zu 0,5 bis ≤ 5 Gew.-%, bezogen auf die Gesamtmenge der Monomere B, Acrylsäure und/oder Methacrylsäure und zu 95 bis 99,5 Gew.-%, bezogen auf die Gesamtmenge der Monomere B, mindestens ein nichtionisches Monomer B2 umfasst, während es sich bei mindestens 60 Gew.-% des Monomers B2 um Styrol handelt.

10. Verfahren nach einem der Ansprüche 1 bis 9, wobei die anionischen Polymere A und B unabhängig voneinander eine Glasübergangstemperatur im Bereich von -20 °C bis 60 °C aufweisen.

11. Holz, beschichtet gemäß dem Verfahren nach einem der Ansprüche 1 bis 10.

12. Holz, beschichtet nach Anspruch 10, wobei es sich bei dem Holz um Kiefer handelt.

13. Verfahren zum Verhindern von Flecken, umfassend das Anwenden des Verfahrens nach einem der Ansprüche 1 bis 10.

**Revendications**

1.  Procédé de revêtement de bois par au moins deux compositions de revêtement à base d'eau, le procédé comprenant :

    a) application d'une composition de revêtement A comprenant au moins un polymère anionique A ayant un paramètre de Hansch ≤ 1,6, et séchage ou le fait de laisser sécher ladite composition aqueuse de revêtement A,
    b) application d'une composition de revêtement B comprenant au moins un polymère anionique B ayant un paramètre de Hansch ≥ 1,7 et un pigment, et séchage ou le fait de laisser sécher ladite composition aqueuse de revêtement B,

    étant entendu que la différence des paramètres de Hansch du polymère anionique B et du polymère anionique A est d'au moins 0,5, et dans lequel le polymère anionique A est obtenu par polymérisation en émulsion aqueuse par des radicaux libres d'un mélange comprenant des monomères A éthyléniquement insaturés et dans lequel le polymère anionique B est obtenu par polymérisation en émulsion aqueuse par des radicaux libres d'un mélange comprenant des monomères B éthyléniquement insaturés.

2.  Procédé selon la revendication 1, dans lequel la différence des paramètres de Hansch du polymère anionique B et du polymère anionique A est d'au moins 0,7.

3.  Procédé selon l'une ou l'autre des revendications 1 et 2, dans lequel le polymère anionique A est obtenu par polymérisation en émulsion aqueuse par des radicaux libres d'un mélange comprenant des monomères A éthyléniquement insaturés, le mélange de monomères comprenant :

    - 0,1 à ≤ 5 % en poids, sur la base de la quantité totale de monomères A, d'au moins un monomère à fonction acide, comme un monomère A1, et
    - 95 à 99,9 % en poids, sur la base de la quantité totale de monomères A, d'au moins un monomère non ionique, comme un monomère A2.

4. Procédé selon l'une quelconque des revendications 1 à 3, dans lequel le polymère anionique A est formé à partir de

- 0,1 à ≤ 5 % en poids, sur la base de la quantité totale de monomères A, d'au moins un monomère à fonction acide, comme un monomère A1, et
- 95 à 99,9 % en poids, sur la base de la quantité totale de monomères A, d'au moins un monomère non ionique, comme un monomère A2, tandis qu'au moins 60 % en poids du monomère A2 est choisi dans le groupe constitué par l'acétate de vinyle, l'acrylate d'éthyle, l'acrylate de méthyle, le méthacrylate de méthyle, le styrène, l'acrylate de n-butyle, le méthacrylate de n-butyle et l'acrylate de 2-éthylhexyle, et jusqu'à 40 % du monomère A2 sont d'autres monomères A2.

5. Procédé selon l'une quelconque des revendications 1 à 4, dans lequel le polymère anionique B est obtenu par polymérisation en émulsion aqueuse par des radicaux libres d'un mélange comprenant des monomères B éthyléniquement insaturés, le mélange de monomères comprenant :

- 0,5 à ≤ 5 % en poids, sur la base de la quantité totale de monomères B, d'au moins un monomère à fonction acide, comme un monomère B1 et
- 95 à 99,5 % en poids, sur la base de la quantité totale de monomères B, d'au moins un monomère non ionique, comme un monomère B2.

6. Procédé selon l'une quelconque des revendications 1 à 5, dans lequel le polymère anionique B est formé à partir de :

- 0,5 à ≤ 5 % en poids, sur la base de la quantité totale de monomères B, d'au moins un monomère à fonction acide, comme un monomère B1, et
- 95 à 99,5 % en poids, sur la base de la quantité totale de monomères B, d'au moins un monomère non ionique, comme un monomère B2, tandis qu'au moins 60 % du monomère B2 est choisi dans le groupe constitué par le styrène, l'$\alpha$-méthylstyrène, le méthacrylate de méthyle, l'acrylate de n-butyle et l'acrylate de 2-éthylhexyle, et jusqu'à 40 % du monomère B2 sont d'autres monomères B2.

7. Procédé selon l'une quelconque des revendications 3 à 6, dans lequel le monomère à fonction acide, comme un monomère A1 et/ou B1 sont l'acide acrylique et/ou l'acide méthacrylique.

8. Procédé selon l'une quelconque des revendications 1 à 7, dans lequel le pigment est choisi dans le groupe constitué par le dioxyde de titane, le carbonate de calcium, l'argile et le talc.

9. Procédé selon l'une quelconque des revendications 1 à 8, dans lequel

- le polymère anionique A est obtenu par polymérisation en émulsion aqueuse par des radicaux libres d'un mélange de monomères comprenant 0,1 à ≤ 5 % en poids, par rapport à la quantité totale de monomères A d'acide acrylique et 95 à 99,1 % en poids, par rapport à la quantité totale de monomères A, d'au moins un monomère non ionique A2, tandis qu'au moins 60 % en poids du monomère A2 sont choisis dans le groupe constitué par l'acétate de vinyle et l'acrylate d'éthyle ;
- et le polymère anionique B est obtenu par polymérisation en émulsion aqueuse par des radicaux libres d'un mélange de monomères comprenant 0,5 à ≤ 5 % en poids, par rapport à la quantité totale de monomères B d'acide acrylique et/ou d'acide méthacrylique et 95 à 99,5 % en poids, par rapport à la quantité totale de monomères B, d'au moins un monomère non ionique B2, tandis qu'au moins 60 % en poids du monomère B2 est le styrène.

10. Procédé selon l'une quelconque des revendications 1 à 9, dans lequel les polymères anioniques A et B ont indépendamment une température de transition vitreuse dans la plage de -20 °C à 60 °C.

11. Bois revêtu selon le procédé selon l'une quelconque des revendication 1 à 10.

12. Bois revêtu selon la revendication 10, dans lequel le bois est le pin.

13. Procédé pour le blocage de tâches comprenant l'application du procédé selon l'une quelconque des revendications 1 à 10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3847857 A
- WO 2009007232 A
- US 20100124614 A
- EP 1149875 A
- US 5527619 A
- DE 4003422 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A
- EP 574803 A
- EP 1732962 A

**Non-patent literature cited in the description**

- **HANSCH, FUJITA**. *J. Amer. Chem. Soc.*, 1964, vol. 86, 1616-1626
- **H. KUBINYI et al.** Methods and Principles of Medicinal Chemistry. VCH, 1993, vol. 1
- Substituent Constants for Correlation Analysis. **C. HANSCH** ; **A. LEO**. Chemistry and Biology. Wiley, 1979
- **C. HANSCH** ; **P. MALONEY** ; **T. FUJITA** ; **R. MUIR**. *Nature*, 1962, vol. 194, 178-180
- Estimation Programs Interface Suite™ for Microsoft® Windows, v4.11. United States Environmental Protection Agency, 2012
- Emulsionspolymerisation [Emulsion Polymerization. Encyclopedia of Polymer Science and Engineering. 1987, vol. 8, 659
- **D.C. BLACKLEY**. *High Polymer Latices*, 1966, vol. 1, 35
- **H. WARSON**. The Applications of Synthetic Resin Emulsions. 1972, 246
- **D. DIEDERICH**. *Chemie in unserer Zeit*, 1990, vol. 24, 135-142
- Emulsion Polymerisation. Interscience Publishers, 1965
- **F. HÖLSCHER**. Dispersionen synthetischer Hochpolymerer [Dispersions of Synthetic High Polymers. Springer-Verlag, 1969
- Römpp Chemie Lexikon - Version 1.0. Georg Thieme Verlag, 1995
- **T.G. FOX**. *Bull. Am. Phys. Soc.*, 1956, vol. 1, 123
- Ullmann's Encyclopädie der technischen Chemie. Verlag Chemie, 1980, vol. 19, 18
- **J. BRANDRUP** ; **E.H. IMMERGUT**. Polymer Handbook. J. Wiley, 1966
- Ullmann's Encyclopedia of Industrial Chemistry. Verlag Chemie, 1992, 169